(19) Europäisches Patentamt
European Patent Office
Office européen des brevets

(11) **EP 3 639 355 B1**

(12) **FASCICULE DE BREVET EUROPEEN**

(45) Date de publication et mention
de la délivrance du brevet:
**08.11.2023 Bulletin 2023/45**

(21) Numéro de dépôt: **18735647.2**

(22) Date de dépôt: **24.05.2018**

(51) Classification Internationale des Brevets (IPC):
**H02M 1/42** *(2007.01)*    **H02M 7/483** *(2007.01)*
**H02M 7/487** *(2007.01)*

(52) Classification Coopérative des Brevets (CPC):
**H02M 1/4216; H02M 7/4833;** H02M 7/487;
Y02B 70/10

(86) Numéro de dépôt international:
**PCT/FR2018/051228**

(87) Numéro de publication internationale:
**WO 2018/229378 (20.12.2018 Gazette 2018/51)**

(54) **PROCÉDÉ DE COMMANDE D'UN REDRESSEUR DE VIENNE TRIPHASÉ**

VERFAHREN ZUR STEUERUNG EINES DREIPHASIGEN VIENNA-GLEICHRICHTERS

METHOD FOR CONTROLLING A THREE-PHASE VIENNA RECTIFIER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.06.2017 FR 1755421**

(43) Date de publication de la demande:
**22.04.2020 Bulletin 2020/17**

(73) Titulaires:
• **Renault s.a.s**
**92100 Boulogne Billancourt (FR)**
• **Nissan Motor Co. Ltd**
**Yokohama-Shi, Kanagawa 221-0023 (JP)**

(72) Inventeur: **ROUHANA, Najib**
**60200 Compi gne (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**WO-A2-01/47094**

• **IDE P ET AL: "Investigation of low cost control
schemes for a selected 3-level switched mode
rectifier", TELECOMMUNICATIONS ENERGY
CONFERENCE, 1997. INTELEC 97., 19TH
INTERNAT IONAL MELBOURNE, VIC.,
AUSTRALIA 19-23 OCT. 1997, NEW YORK, NY,
USA,IEEE, US, 19 octobre 1997 (1997-10-19),
pages 413-418, XP010261385, DOI:
10.1109/INTLEC.1997.645920 ISBN:
978-0-7803-3996-5**
• **GULES R ET AL: "SWITCHED-MODE
THREE-PHASE THREE-LEVEL
TELECOMMUNICATIONS RECTIFIER", INTELEC
'99. 21ST.INTERNATIONAL
TELECOMMUNICATIONS ENERGY
CONFERENCE. COPENHAGEN, JUNE 6 - 9, 1999;
[INTELEC. INTERNATIONAL
TELECOMMUNICATIONS ENERGY
CONFERENCE], NEW YORK, NY : IEEE, US, 6 juin
1999 (1999-06-06), pages 29-03/01, XP000868436,
ISBN: 978-0-7803-5625-2**

**Description**

La présente invention concerne un procédé de commande d'un redresseur triphasé pour un dispositif de charge à entrée triphasée, comprenant un convertisseur AC-DC (courant alternatif-courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Ils assurent donc une conversion d'un courant alternatif en courant continu. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

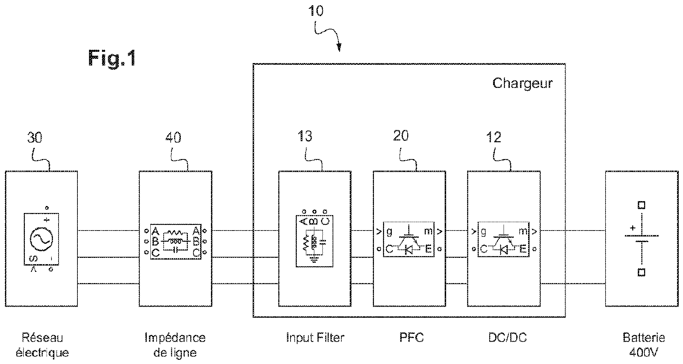

On se place ici dans la catégorie des dispositifs de charge à entrée triphasée, qui présentent une puissance de charge supérieure relativement aux dispositifs de charge à entrée monophasée. La figure 1 illustre une topologie connue d'un dispositif de charge 10 isolé, embarqué sur un véhicule électrique ou hybride pour la recharge de la batterie haute tension du véhicule à partir du réseau électrique triphasé 30 auquel le dispositif de charge embarqué 10 est connecté par l'intermédiaire de l'impédance de ligne 40 du réseau.

Afin de mettre en oeuvre la fonction de conversion AC-DC avec isolation galvanique, il est connu d'utiliser un dispositif de charge 10 comprenant un premier convertisseur AC-DC, qui comporte un circuit correcteur de facteur de puissance 20 (PFC, pour « Power factor Correction ») afin de limiter les harmoniques de courant d'entrée, et un deuxième convertisseur DC-DC (courant continu-courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 20 par rapport au réseau électrique triphasé 30.

Le circuit PFC 20 est commandé par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC 20, il est connu, notamment du document d'art antérieur CN104811061, de mettre en oeuvre un redresseur triphasé trois niveaux à trois interrupteurs, communément connu sous le nom de redresseur triphasé de Vienne, tel que décrit dans le document d'art antérieur EP94120245 et en figure 2.

Le choix de cette topologie est en effet particulièrement avantageux du point de vue des performances pour la correction de facteur de puissance.

Dans un redresseur triphasé de Vienne 20, chaque phase de la tension d'entrée alternative triphasée 30 est reliée par des inductances respectives La, Lb, Le à un bras de commutation 1, 2, 3 du redresseur 20, lequel est pourvu d'une cellule d'interrupteurs de puissance respectivement Sa, Sb, Sc.

Les cellules d'interrupteurs de puissance Sa, Sb, Sc étant disposées chacune entre une inductance respective La, Lb, Le et un point milieu O entre les deux tensions de sortie Vdch et Vdcl du redresseur 20, correspondant respectivement à la tension sur un premier condensateur de sortie C1 connecté entre le point milieu O et une ligne d'alimentation positive H et à la tension sur un deuxième condensateur de sortie C2 connecté entre le point milieu O et une ligne d'alimentation négative L.

Généralement pour commander un tel redresseur de Vienne 20, on mesure les tensions et les courants en entrée de chaque interrupteur Sa, Sb, Sc ainsi qu'en sortie du redresseur et on utilise des boucles de régulation permettant de générer des rapports cycliques nécessaires pour régler le temps de conduction moyen des interrupteurs Sa, Sb, Sc.

L'état de l'art sur l'application des rapports cycliques sur chaque bras de commutation d'un redresseur triphasé de Vienne consiste à utiliser l'un ou l'autre des deux interrupteurs en fonction du sens de circulation du courant sur le bras.

Cependant, les procédés connus de l'art antérieur pour générer les rapports cycliques du redresseur de Vienne 20 produisent aux bornes des condensateurs de sortie C1, C2 des tensions fluctuantes, qui rendent la régulation du DC/DC 12 relativement complexe et peu fiable.

Aussi, on cherche une solution pour améliorer la régulation du DC/DC 12 en la rendant plus simple et plus robuste.

Le document WO0147094 décrit un procédé de commande d'un redresseur triphasé de Vienne permettant de rééquilibrer les tensions aux bornes des condensateurs en sortie du redresseur de Vienne.

On propose un de procédé de commande d'un redresseur de Vienne triphasé, comprenant une pluralité d'interrupteurs de puissance commandés associés chacun à une phase électrique ; le procédé comprenant :

- une étape de transformation de trois tensions composées de consigne fournies en trois tensions simples de consigne;

- une étape de calcul d'une composante homopolaire à injecter en fonction des valeurs et des signes des tensions simples de consigne et des valeurs moyennes des courants de phases du redresseur de Vienne triphasé ;
- une étape de calcul d'une valeur de modulante pour chaque phase du redresseur de Vienne triphasé en fonction de la composante homopolaire calculée à injecter et des trois tensions simples de consigne; et
- une étape de génération de six signaux de commutations des interrupteurs de puissance commandés, en fonction du signe des courants de phases du redresseur de Vienne triphasé et des valeurs de modulantes calculées.

Ainsi, par la commutation des interrupteurs de puissance commandés en fonction des signaux générés, on rend les courants en entrée des deux convertisseurs DC-DC constants et équilibrés, ce qui permet une régulation du DC/DC plus simple et plus robuste.

Le calcul de la composante homopolaire ($f(3wt)$) comprend l'application de l'équation suivante :

$$f(3wt) = v_z^* = \frac{\sigma_a.(v_a^* \times \langle i_a \rangle) + \sigma_b.(v_b^* \times \langle i_b \rangle) + \sigma_c.(v_c^* \times \langle i_c \rangle)}{-(\sigma_a.\langle i_a \rangle + \sigma_b.\langle i_b \rangle + \sigma_c.\langle i_c \rangle)}$$

dans laquelle $\sigma_{x=a,b,c} = signe(v_{x=a,b,c}^*)$ suivant les valeurs du tableau suivant :

| Condition | $\sigma_a$ | $\sigma_b$ | $\sigma_c$ |
|---|---|---|---|
| $v_a^* \geq 0, v_b^* < 0$ et $v_c^* < 0$ | + | - | - |
| $v_a^* \geq 0, v_b^* \geq 0$ et $v_c^* < 0$ | + | + | - |
| $v_a^* < 0, v_b^* \geq 0$ et $v_c^* < 0$ | - | + | - |
| $v_a^* < 0, v_b^* \geq 0$ et $v_c^* \geq 0$ | - | + | + |
| $v_a^* < 0, v_b^* < 0$ et $v_c^* \geq 0$ | - | - | + |
| $v_a^* \geq 0, v_b^* < 0$ et $v_c^* \geq 0$ | + | - | + |

Ainsi, on peut calculer la composante homopolaire à injecter par usage des signes des tensions simples, des valeurs de tensions simples et des valeurs moyennes de courants de phases, ce qui permet un calcul rapide et peu coûteux en temps de traitement par exemple par un processeur.

Avantageusement et de manière non limitative, chaque valeur de modulante est calculée par addition de la composante homopolaire avec la tension simple de consigne associée. Ce qui permet un calcul des valeurs de modulantes rapide et simple notamment parce qu'il n'implique pas de calcul trigonométrique ou vectoriel.

Avantageusement et de manière non limitative, la génération des six signaux de commutations des interrupteurs de puissance commandés comprend la comparaison des valeurs de modulante par rapport à deux porteuses hautes fréquences qui sont synchrones et en phase l'une par rapport à l'autre.

Ainsi, on simplifie la génération des signaux de commutations par une simple comparaison des valeurs de modulantes calculées à des porteuses haute fréquences.

Avantageusement et de manière non limitative, pour chaque phase du redresseur de Vienne, si le courant de phase est positif on compare la modulante associée à la phase à un signal triangulaire symétrique variant entre 0 et +1.

Avantageusement et de manière non limitative, pour chaque phase du redresseur de Vienne, si le courant de phase est négatif on compare la modulante associée à la phase à un signal triangulaire symétrique variant entre -1 et 0. Ce dernier est en phase le signal triangulaire symétrique variant entre 0 et 1.

Les deux comparaisons précédentes présentent un même avantage qui est d'obtenir une comparaison logique simple à réaliser par usage d'un signal triangulaire rapide à générer.

L'invention concerne aussi un dispositif de commande d'un redresseur de Vienne triphasé comprenant des moyens de mises en oeuvre du procédé selon l'une quelconque des revendications précédentes.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

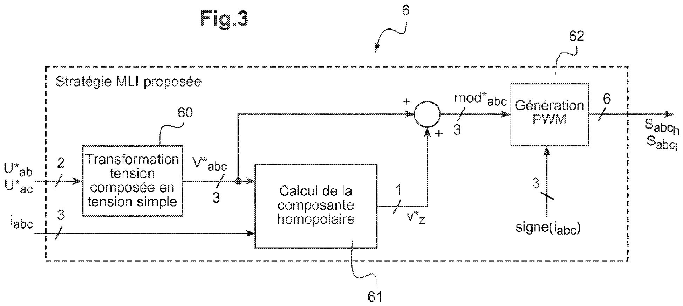

- la figure 1 représente un convertisseur de tension mettant en oeuvre un procédé selon un mode de réalisation de l'invention représenté figure 3;
- la figure 2 représente un redresseur de Vienne triphasé connu de l'art antérieur ;
- la figure 3 est une représentation schématique d'un mode de réalisation de l'invention ;

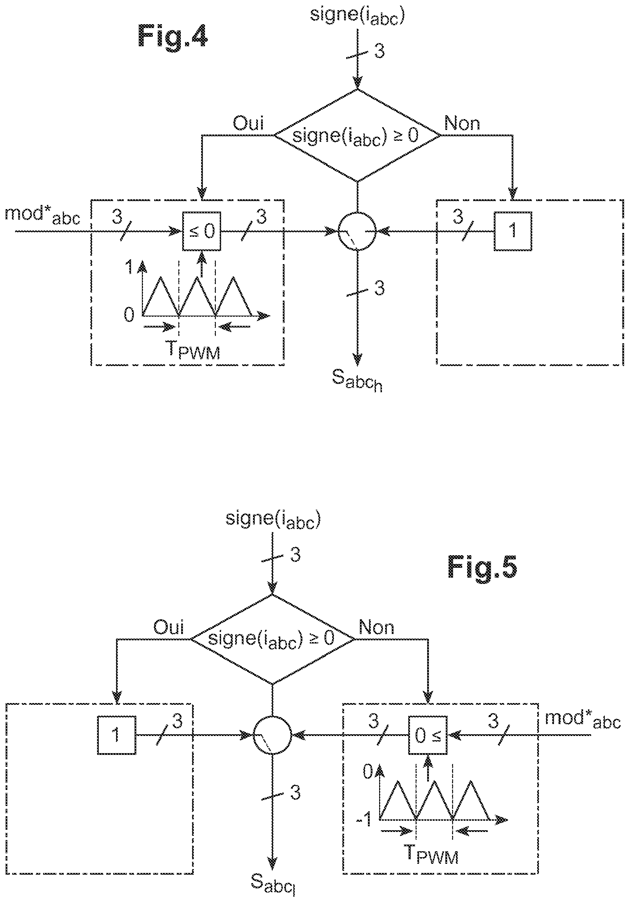

- la figure 4 est une représentation schématique d'une étape de génération des signaux de commutations des interrupteurs de puissance commandés du redresseur de Vienne, selon le mode de réalisation de la figure 3 ; et La figure 5 est une représentation schématique d'une autre étape de génération des signaux de commutations des interrupteurs de puissance commandés du redresseur de Vienne, selon le mode de réalisation de la figure 3.

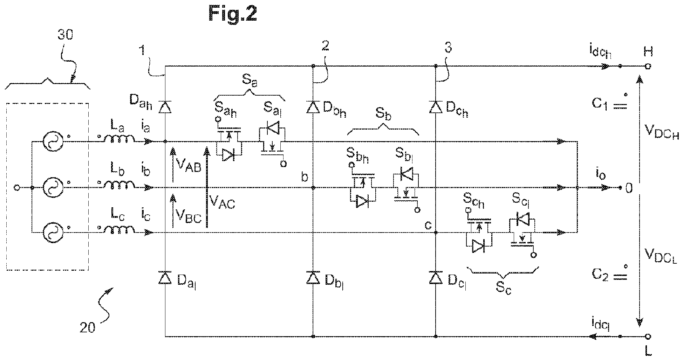

La figure 2 représente la structure d'un redresseur triphasé de Vienne 20 connu de l'art antérieur, tel qu'il est employé dans l'invention.

Le redresseur triphasé de Vienne 2 comprend trois connexions entrantes parallèles couplées chacune à une phase d'un réseau d'alimentation électrique triphasé 30 par l'intermédiaire d'une bobine d'inductance en série La, Lb, Lc, et reliée chacune à une paire d'interrupteurs Sa, Sb, Sc formant un premier un deuxième et un troisième bras de commutation du redresseur triphasé de Vienne.

Chaque paire d'interrupteurs Sa, Sb, Sc comprend un montage série en tête bêche constitué d'un premier interrupteur correspondant Sah, Sbh, Sch, qui est piloté quand un courant d'entrée correspondant Ia, Ib, Ic est positif, et d'un second interrupteur correspondant Sal, Sbl, Scl qui est piloté quand le courant d'entrée correspondant est négatif. Autrement dit, on utilise un seul interrupteur piloté sur une branche de commutation pour le hachage du courant. Les interrupteurs sont formés par des composants semi-conducteurs commandés à la fermeture et à l'ouverture, tel que des transistors SiC-MOS (acronyme anglais pour Silicon Carbide-Metal *Oxide Semiconductor)*, connectés en antiparallèle avec une diode. Ce type de semi-conducteurs est adapté pour des fréquences de découpage très élevées. Les interrupteurs Sah, Sbh, Sch sont également nommés interrupteurs haut et les interrupteurs Sal, Sbl, Scl, interrupteurs bas.

Le redresseur triphasé de Vienne 20 comprend aussi trois branches parallèles 1, 2 et 3, comportant chacune deux diodes Dah et Dal, Dbh et Dbl et Dch et Dcl, qui forment un pont triphasé à six diodes permettant un transfert unidirectionnel de l'énergie et de redresser le courant et la tension prélevés à partir du réseau d'alimentation électrique 30 triphasé.

Chaque entrée du redresseur triphasé de Vienne 20 est connectée, par une connexion entrante parallèle respective, à un point de connexion situé entre deux diodes d'une même branche 1, 2 et 3.

Les deux extrémités communes des branches 1, 2 et 3 constituent deux bornes de sorties H et L, respectivement positive H et négative L, du redresseur triphasé de Vienne 20, qui sont destinées à être couplées au dispositif DC-DC 12.

Les bras de commutation Sa, Sb, Sc de chaque phase sont par ailleurs connectés chacun respectivement entre le point de connexion a, b, c situé entre les deux diodes des première 1, deuxième 2 et troisième branches 3 et un point milieu O des tensions de sortie $V_{DCH}$ et $V_{DCL}$ du redresseur triphasé de Vienne 20, correspondant respectivement à la tension sur un condensateur de sortie C1 entre la borne de sortie positive H du redresseur triphasé et le point milieu O et à la tension sur un condensateur de sortie C2 entre le point milieu O et une borne de sortie négative L du redresseur triphasé 20.

La tension sur les condensateurs de sortie C1, C2 est asservie de façon indépendante par le convertisseur DC-DC du dispositif de charge connecté en sortie du redresseur triphasé de Vienne 20, selon la topologie globale illustré à la figure 1. Autrement dit, les tensions de sortie du redresseur triphasé de Vienne 20 sont commandées par le convertisseur DC-DC 12.

Le redresseur triphasé de Vienne 20 intercalé à l'entrée de l'alimentation du chargeur 10 assume le rôle de correction du facteur de puissance du chargeur. Un tel rôle permet d'empêcher les courants perturbateurs (harmoniques) produits par le chargeur, de circuler à travers l'impédance du réseau, située en amont du redresseur de Vienne 20.

Les bras de commutation Sa, Sb et Sc de chaque phase du réseau triphasé 30 sont contrôlés aux moyens de six signaux de commande PWM (d'après l'anglais « Pulse Width Modulation ») ayant un rapport cyclique variable à fréquence de découpage fixe égale à 140kHz individuellement réglé par des moyens de traitement de type FPGA par exemple (non représenté) pour des fréquences d'échantillonnage élevées.

Ainsi, les moyens de traitement sont adaptés à déterminer les rapports cycliques des signaux de commande de commutation des interrupteurs des bras de commutation du redresseur, nécessaires pour l'asservissement des courants sinusoïdaux en entrée du redresseur.

L'invention concerne un procédé de commande des moyens de traitements pour l'application de rapports cycliques adaptés pour, d'une part, réduire au minimum possible l'ondulation des courants en entrée des deux capacités C1 et C2 et, d'autre part, égaliser ces courants de sorte à fournir une puissance égale sur les deux bus DC en sortie du redresseur de Vienne 20, ce qui permet de rendre la régulation du DC/DC 12 plus robuste suite à la minimisation de l'ondulation du courant en entrée du DC/DC. En effet, lorsque le flux d'énergie en aval du redresseur de Vienne 20 est constant, il est plus simple d'asservir en tension le DC/DC 12.

On cherche ici à égaliser en valeur moyenne les courants d'entrée $i_{dc_h}$ et $i_{dc_l}$ respectivement en amont de la capacité du haut C1 et du bas C2.

Les courants, notés $i_{dch}$ et $i_{dcl}$ respectivement, sont exprimés en valeur instantanée en fonction des courants dans chaque phase de la manière suivante :

$$i_{dc_h} = \left(D_{a_h} \times i_a\right) + \left(D_{b_h} \times i_b\right) + \left(D_{c_h} \times i_c\right) \tag{1}$$

$$i_{dc_l} = \left(D_{a_l} \times i_a\right) + \left(D_{b_l} \times i_b\right) + \left(D_{c_l} \times i_c\right) \tag{2}$$

avec $D_{ah,l} = (1 - S_{ah,l})$, $D_{bh,l} = (1 - S_{bh,l})$ et $D_{Ch,l} = (1 - S_{Ch,l})$ tel que $S_{ah,l} = \{0,1\} = S_{bh,l} = S_{Ch,l}$ représentent les signaux de commutation des semi-conducteurs, haut et bas, de chaque phase.

Partant de là, les équations (1) et (2) s'expriment de la façon suivante :

$$i_{dc_h} = \left(\left(1 - S_{a_h}\right) \times i_a\right) + \left(\left(1 - S_{b_h}\right) \times i_b\right) + \left(\left(1 - S_{c_h}\right) \times i_c\right) \tag{3}$$

$$i_{dc_l} = \left(\left(1 - S_{a_l}\right) \times i_a\right) + \left(\left(1 - S_{b_l}\right) \times i_b\right) + \left(\left(1 - S_{c_l}\right) \times i_c\right) \tag{4}$$

En calculant la valeur moyenne des équations (3) et (4), au niveau d'une période de commutation, on obtient :

$$\langle i_{dc_h}\rangle = \left(\left(1 - \langle S_{a_h}\rangle\right) \times \langle i_a\rangle\right) + \left(\left(1 - \langle S_{b_h}\rangle\right) \times \langle i_b\rangle\right) + \left(\left(1 - \langle S_{c_h}\rangle\right) \times \langle i_c\rangle\right) \tag{5}$$

$$\langle i_{dc_l}\rangle = \left(\left(1 - \langle S_{a_l}\rangle\right) \times \langle i_a\rangle\right) + \left(\left(1 - \langle S_{b_l}\rangle\right) \times \langle i_b\rangle\right) + \left(\left(1 - \langle S_{c_l}\rangle\right) \times \langle i_c\rangle\right) \tag{6}$$

Or, la valeur moyenne des courants de phase (notée $\langle i_a\rangle$, $\langle i_b\rangle$ et $\langle i_c\rangle$ ) n'est autre que la composante fondamentale du courant dépourvue des composantes hautes fréquences qui sont dues au découpage.

Cette composante fondamentale est la consigne de courant obtenue à partir de la puissance de consigne fixée par l'utilisateur dans le cas d'une régulation par correction du facteur de puissance PFC du redresseur de pont à Vienne 20. D'autre part, la valeur moyenne d'un signal de commutation notée $\langle S_{Xh,l}\rangle$ n'est autre que la durée de fermeture du semi-conducteur pendant la période de commutation. Cette dernière est connue sous le nom *rapport cyclique* et notée $\alpha_{Xh,l}$. Par suite, les équations (5) et (6) deviennent :

$$\langle i_{dc_h}\rangle = \left(\left(1 - \alpha_{a_h}\right) \times \langle i_a\rangle\right) + \left(\left(1 - \alpha_{b_h}\right) \times \langle i_b\rangle\right) + \left(\left(1 - \alpha_{c_h}\right) \times \langle i_c\rangle\right) \tag{7}$$

$$\langle i_{dc_l}\rangle = \left(\left(1 - \alpha_{a_l}\right) \times \langle i_a\rangle\right) + \left(\left(1 - \alpha_{b_l}\right) \times \langle i_b\rangle\right) + \left(\left(1 - \alpha_{c_l}\right) \times \langle i_c\rangle\right) \tag{8}$$

L'objectif étant d'avoir $\langle i_{dc_h}\rangle = \langle i_{dc_l}\rangle$, on cherche à déterminer la valeur des différents rapports cycliques à appliquer pour chaque phase. Or, un rapport cyclique peut être déterminé en fonction d'un signal basse fréquence, appelé « la modulante » et noté $mod_x$ tel que :

$$\alpha_x = 1 - mod_x \tag{9}$$

Par suite, les équations (7) et (8) deviennent égale à :

$$\langle i_{dc_h}\rangle = \left(mod_{a_h}^* \times \langle i_a\rangle\right) + \left(mod_{b_h}^* \times \langle i_b\rangle\right) + \left(mod_{c_h}^* \times \langle i_c\rangle\right) \tag{10}$$

$$\langle i_{dc_l}\rangle = \left(mod_{a_l}^* \times \langle i_a\rangle\right) + \left(mod_{b_l}^* \times \langle i_b\rangle\right) + \left(mod_{c_l}^* \times \langle i_c\rangle\right) \tag{11}$$

Dans une stratégie de modulation où l'approche scalaire par injection d'un signal homopolaire est utilisée pour le développement de la loi de pilotage de l'électronique de puissance, la « modulante » est exprimée en fonction de la composante harmonique injectée et des tensions de références générées par la régulation en boucle fermée de la façon suivante

$$\begin{cases} mod_a^* = v_a^* + v_z^* \\ mod_b^* = v_b^* + v_z^* \\ mod_c^* = v_c^* + v_z^* \end{cases} \tag{12}$$

avec :

- $v_a^*$, $v_b^*$ et $v_c^*$ sont les tensions de consigne normalisées par rapport à la tension du bus continue, notée $V_{dc}$, et appartiennent à l'intervalle $\left[-\frac{1}{\sqrt{3}}, +\frac{1}{\sqrt{3}}\right]$ . Ils sont obtenus à partir de la transformation des tensions composées en tensions simples ;

- $$mod_x^* = \begin{cases} mod_{x_h}^* & (i_x \geq 0) \\ mod_{x_l}^* & (i_x < 0) \end{cases} \text{ avec } x = a, b, c$$

- $v_z^*$ est la tension homopolaire à injecter

Ainsi, on cherche à déterminer lors du procédé selon l'invention la tension homopolaire $v_z^*$ .

Au cours d'une première étape 60, on transforme 60 les tensions composées U\*ab, U\*ac, U\*bc (tensions de consigne entre phases, correspondant aux tensions respectivement entre les points a et b, a et c et b et c) en tensions simple v'a, v\*b, v\*c, dites aussi tensions de consigne v'a, v\*b, v\*c.

Il existe plusieurs solutions pour réaliser une telle transformation 60, connues de l'homme du métier.

Dans ce mode de réalisation, on considère, par soucis de simplicité, le problème dans l'espace réel formé par les trois tensions simples de consignes.

En effet, pour une stratégie de modulation donnée, le vecteur tension de référence tournant est exprimé, en moyenne, en fonction des trois tensions simples (pour le cas triphasé) notées $v_a^*$, $v_b^*$ et $v_c^*$ .

On applique l'équation (1) pour obtenir les trois tensions simples (v\*a, v\*b, v\*c) à partir des deux tensions composées :

$$\begin{cases} v_a^* = \frac{1}{3}(U_{ab}^* - U_{ac}^*) = \frac{v_a}{V_{dc}} \\ v_b^* = \frac{1}{3}(-2U_{ab}^* + U_{ac}^*) = \frac{v_b}{V_{dc}} \\ v_c^* = \frac{1}{3}(U_{ab}^* - 2U_{ac}^*) = \frac{v_c}{V_{dc}} \end{cases} \tag{13}$$

Au cours d'une deuxième étape de calcul 61, on calcule la composante homopolaire à injecter.

A titre d'exemple de réalisation, on considère les valeurs de tensions simples suivantes : ( $v_a^* \geq 0, v_b^* < 0$ et $v_c^* < 0$ ).

Comme les tensions et les courants sont régulés selon une correction du facteur de puissance PFC, on considère que les courants et les tensions sont en phase et leurs signes sont identiques.

Ainsi, comme $i_a \geq 0$, $i_b < 0$ et $i_c < 0$, seules les diodes suivantes $D_{1h}$, $D_{2l}$ et $D_{3l}$ deviennent passantes. Par suite, les équations (1) et (2) deviennent :

$$i_{dc_h} = \left(D_{a_h} \times i_a\right) \tag{14}$$

$$i_{dc_l} = \left(D_{b_l} \times i_b\right) + \left(D_{c_l} \times i_c\right) \tag{15}$$

D'où ,

$$\langle i_{dc_h}\rangle = \left(mod^*_{a_h} \times \langle i_a\rangle\right) \tag{16}$$

$$\langle i_{dc_l}\rangle = \left(mod^*_{b_l} \times \langle i_b\rangle\right) + \left(mod^*_{c_l} \times \langle i_c\rangle\right) \tag{17}$$

En exprimant les équations (16) et (17) en fonction de l'équation (12), on obtient :

$$\langle i_{dc_h}\rangle = \left((v^*_a + v^*_z) \times \langle i_a\rangle\right) \tag{18}$$

$$\langle i_{dc_l}\rangle = \left((v^*_b + v^*_z) \times \langle i_b\rangle\right) + \left((v^*_c + v^*_z) \times \langle i_c\rangle\right) \tag{19}$$

En égalisant les deux équations (18) et (19), on en déduit l'équation de $v^*_z$ à injecter pour ce cas d'étude spécifique ( $v^*_a \geq 0, v^*_b < 0$ et $v^*_c < 0$ ) tel que

$$v^*_z = \frac{(v^*_a \times \langle i_a\rangle) - (v^*_b \times \langle i_b\rangle) - (v^*_c \times \langle i_c\rangle)}{-\langle i_a\rangle + \langle i_b\rangle + \langle i_c\rangle} \tag{20}$$

En généralisant ceci sur une période électrique complète, on en déduit l'équation générique (21) de la composante homopolaire à injecter

$$v^*_z = \frac{\sigma_a.(v^*_a \times \langle i_a\rangle) + \sigma_b.(v^*_b \times \langle i_b\rangle) + \sigma_c.(v^*_c \times \langle i_c\rangle)}{-(\sigma_a.\langle i_a\rangle + \sigma_b.\langle i_b\rangle + \sigma_c.\langle i_c\rangle)} \tag{21}$$

avec $\sigma_{abc} = signe(v^*_{abc})$ tel que :

| Condition | $\sigma_a$ | $\sigma_b$ | $\sigma_c$ |
|---|---|---|---|
| $v^*_a \geq 0, v^*_b < 0$ et $v^*_c < 0$ | + | - | - |
| $v^*_a \geq 0, v^*_b \geq 0$ et $v^*_c < 0$ | + | + | - |
| $v^*_a < 0, v^*_b \geq 0$ et $v^*_c < 0$ | - | + | - |
| $v^*_a < 0, v^*_b \geq 0$ et $v^*_c \geq 0$ | - | + | + |
| $v^*_a < 0, v^*_b < 0$ et $v^*_c \geq 0$ | - | - | + |
| $v^*_a \geq 0, v^*_b < 0$ et $v^*_c \geq 0$ | + | - | + |

Ensuite on calcule les « modulantes » des trois phases mod*a, mod*b, mod'c à partir de l'équation (12) tel que :

$$\begin{cases} mod_a^* = v_a^* + v_z^* \\ mod_b^* = v_b^* + v_z^* \\ mod_c^* = v_c^* + v_z^* \end{cases} \tag{22}$$

Ensuite on procède à la génération 62 des six signaux de commande PWM pour le pilotage des interrupteurs de puissance commandés Sa, Sb, Sc, en fonction des signes des courants de phase, et par comparaison des « modulantes » mod'a, mod*b, mod'c par rapport à deux porteuses synchrones, qui imposent la fréquence de découpage des semi-conducteurs à 140kHz.

Pour les interrupteurs haut $S_{ah}$, $S_{bh}$, $S_{ch}$ et pour chaque bras x= a, b, c, en référence à la figure 7 :
Si le signe($i_x$) ≥ 0, la « modulante » mod* est comparée avec un signal triangulaire symétrique, qui varie entre 0 et 1, pour la génération de $S_{x_h}$ et $S_{x_l}$ = 1.

Concernant la génération de $S_{x_h}$ :

- Si $mod_x$ est inférieure au signal triangulaire qui varie entre 0 et 1 : $S_{x_h}$ = 1.
- Si $mod_x$ est supérieure ou égale au signal triangulaire qui varie entre 0 et 1 : $S_{x_h}$ = 0.

Pour les interrupteurs bas $S_{al}$, $S_{bl}$, $S_{cl}$ et pour chaque bras x=a,b,c en référence à la figure 8 :
Si le signe($i_x$) < 0, la « modulante » mod* est comparée avec un signal triangulaire symétrique, qui varie entre -1 et 0, pour la génération de $S_{x_l}$ et $S_{x_h}$ = 1.

Concernant la génération de $S_{x_l}$ :

- Si $mod_x$ est inférieure ou égale au signal triangulaire qui varie entre -1 et 0 : $S_{x_l}$ = 0.
- Si $mod_x$ est supérieure au signal triangulaire qui varie entre -1 et 0 - $S_{x_l}$ = 1.

**Revendications**

1. Procédé (6) de commande d'un redresseur de Vienne triphasé (20), comprenant une pluralité d'interrupteurs de puissance commandés (Sa, Sb, Sc) associés chacun à une phase électrique ; le procédé (6) étant **caractérisé en ce qu'**il comprend :

   - une étape de transformation (60) de trois tensions composées (U*ab, U*bc, U*ac) de consigne fournies en trois tensions simples de consigne (v*a, v*b, v*c) ;
   - une étape de calcul (61) d'une composante homopolaire (*f*(3*wt*)) à injecter en fonction des valeurs et des signes des tensions simples de consigne (v*a, v*b, v*c) et des valeurs moyennes des courants de phases (ia, ib,ic) du redresseur de Vienne triphasé (20) ;
   - une étape de calcul d'une valeur de modulante (mod*a, mod*b, mod*c) pour chaque phase du redresseur de Vienne triphasé (20) en fonction de la composante homopolaire (*f*(3*wt*)) calculée à injecter et des trois tensions simples de consigne (v*a, v*b, v*c) ; et
   - une étape de génération (62) de six signaux de commutations des interrupteurs de puissance commandés (Sa, Sb, Sc), en fonction du signe des courants de phases (ia, ib, ic) du redresseur de Vienne triphasé (20) et des valeurs de « modulantes » (mod*a, mod*b, mod*c) calculées,
   le calcul de la composante homopolaire (*f*(3*wt*)) comprenant l'application de l'équation suivante :

$$f(3wt) = v_z^* = \frac{\sigma_a.(v_a^* \times \langle i_a \rangle) + \sigma_b.(v_b^* \times \langle i_b \rangle) + \sigma_c.(v_c^* \times \langle i_c \rangle)}{-(\sigma_a.\langle i_a \rangle + \sigma_b.\langle i_b \rangle + \sigma_c.\langle i_c \rangle)}$$

dans laquelle $\sigma_{x=a,b,c} = signe\left(v_{x=a,b,c}^*\right)$ suivant les valeurs du tableau suivant :

| Condition | $\sigma_a$ | $\sigma_b$ | $\sigma_c$ |
|---|---|---|---|
| $v_a^* \geq 0, v_b^* < 0$ et $v_c^* < 0$ | + | - | - |

(suite)

| Condition | $\sigma_a$ | $\sigma_b$ | $\sigma_c$ |
|---|---|---|---|
| $v_a^* \geq 0,\ v_b^* \geq 0$ et $v_c^* < 0$ | + | + | - |
| $v_a^* < 0,\ v_b^* \geq 0$ et $v_c^* < 0$ | - | + | - |
| $v_a^* < 0,\ v_b^* \geq 0$ et $v_c^* \geq 0$ | - | + | + |
| $v_a^* < 0,\ v_b^* < 0$ et $v_c^* \geq 0$ | - | - | + |
| $v_a^* \geq 0,\ v_b^* <$ ⏐ et $v_c^* \geq 0$ | + | - | + |

**2.** Procédé (6) selon la revendication 1, **caractérisé en ce que** chaque valeur de modulante (mod*a, mod*b, mod*c) est calculée par addition de la composante homopolaire *f*(3*wt*) avec la tension simple de consigne (v*a, v*b, v*c) associée.

**3.** Procédé (6) selon la revendication 1 ou 2, **caractérisé en ce que** la génération (62) des six signaux de commutations des interrupteurs de puissance commandés (Sa, Sb, Sc) comprend la comparaison des valeurs de modulante (mod*a, mod*b, mod*c) par rapport à deux porteuses hautes fréquences qui sont synchrones et en phase l'une par rapport à l'autre.

**4.** Procédé (6) selon la revendication 3, **caractérisé en ce que** pour chaque phase du redresseur de Vienne (20), si le courant de phase est positif on compare la modulante associée à la phase à un signal triangulaire symétrique variant entre 0 et +1.

**5.** Procédé (6) selon la revendication 3 ou 4, **caractérisé en ce que** pour chaque phase du redresseur de Vienne (20), si le courant de phase est négatif on compare la modulante associée à la phase à un signal triangulaire symétrique variant entre -1 et 0.

**6.** Dispositif de commande d'un redresseur de Vienne triphasé comprenant des moyens de mises en oeuvre du procédé (6) selon l'une quelconque des revendications précédentes.


**Patentansprüche**

**1.** Verfahren (6) zur Steuerung eines dreiphasigen Vienna-Gleichrichters (20), umfassend eine Mehrzahl von gesteuerten Leistungsschaltern (Sa, Sb, Sc), die jeweils einer elektrischen Phase zugeordnet sind, wobei das Verfahren (6) **dadurch gekennzeichnet ist, dass** es umfasst:

- einen Schritt des Transformierens (60) von drei bereitgestellten Sollspannungen Außenleiter-Außenleiter (U*ab, U*bc, U*ac) in drei Sollspannungen Außenleiter-Neutralleiter (v*a, v*b, v*c);
- einen Schritt des Berechnens (61) einer Nullkomponente (*f*(3wt)), die in Abhängigkeit von den Werten und von den Vorzeichen der Sollspannungen Außenleiter-Neutralleiter (v*a, v*b, v*c) und von den Mittelwerten der Phasenströme (ia, ib, ic) des dreiphasigen Vienna-Gleichrichters (20) zu injizieren ist;
- einen Schritt des Berechnens eines Modulatorwerts (mod*a, mod*b, mod*c) für jede Phase des dreiphasigen Vienna-Gleichrichters (20) in Abhängigkeit von der berechneten zu injizierenden Nullkomponente (*f*(3wt)) und von den drei Sollspannungen Außenleiter-Neutralleiter (v*a, v*b, v*c); und
- einen Schritt des Erzeugens (62) von sechs Signalen zum Schalten der gesteuerten Leistungsschalter (Sa, Sb, Sc) in Abhängigkeit vom Vorzeichen der Phasenströme (ia, ib, ic) des dreiphasigen Vienna-Gleichrichters (20) und von den berechneten "Modulator"-Werten (mod*a, mod*b, mod*c),
wobei das Berechnen der Nullkomponente (*f*(3wt)) die Anwendung der folgenden Gleichung umfasst:

$$f(3wt) = v_z^* = \frac{\sigma_a.(v_a^* x \langle i_a \rangle) + \sigma_b.(v_b^* x \langle i_b \rangle) + \sigma_c.(v_c^* x \langle i_c \rangle)}{-(\sigma_a.\langle i_a \rangle + \sigma_b.\langle i_b \rangle + \sigma_c.\langle i_c \rangle)}$$

in der $\sigma_{x=a,b,c} = Vorzeichen(v^*_{x=a,b,c})$ gemäß den Werten der folgenden Tabelle:

| Bedingung | $\sigma_a$ | $\sigma_b$ | $\sigma_c$ |
|---|---|---|---|
| $v^*_a \geq 0, v^*_b < 0$ und $v^*_c < 0$ | + | - | - |
| $v^*_a \geq 0, v^*_b \geq 0$ und $v^*_c < 0$ | + | + | - |
| $v^*_a < 0, v^*_b \geq 0$ und $v^*_c < 0$ | - | + | - |
| $v^*_a < 0, v^*_b \geq 0$ und $v^*_c \geq 0$ | - | + | + |
| $v^*_a < 0, v^*_b < 0$ und $v^*_c \geq 0$ | - | - | + |
| $v^*_a \geq 0, v^*_b < 0$ und $v^*_c \geq 0$ | + | - | + |

**2.** Verfahren (6) nach Anspruch 1, **dadurch gekennzeichnet, dass** jeder Modulatorwert (mod*a, mod*b, mod*c) durch Addition der Nullkomponente f(3wt) mit der zugeordneten Sollspannung Außenleiter-Neutralleiter (v*a, v*b, v*c) berechnet wird.

**3.** Verfahren (6) nach Anspruch 1 oder 2, **dadurch gekennzeichnet, dass** das Erzeugen (62) der sechs Signale zum Schalten der gesteuerten Leistungsschalter (Sa, Sb, Sc) das Vergleichen der Modulatorwerte (mod*a, mod*b, mod*c) in Bezug auf zwei Hochfrequenzträger umfasst, die synchron und in Phase zueinander sind.

**4.** Verfahren (6) nach Anspruch 3, **dadurch gekennzeichnet, dass** für jede Phase des Vienna-Gleichrichters (20), wenn der Phasenstrom positiv ist, der der Phase zugeordnete Modulator mit einem zwischen 0 und +1 variierenden symmetrischen Dreiecksignal verglichen wird.

**5.** Verfahren (6) nach Anspruch 3 oder 4, **dadurch gekennzeichnet, dass** für jede Phase des Vienna-Gleichrichters (20), wenn der Phasenstrom negativ ist, der der Phase zugeordnete Modulator mit einem zwischen -1 und 0 variierenden symmetrischen Dreiecksignal verglichen wird.

**6.** Vorrichtung zur Steuerung eines dreiphasigen Vienna-Gleichrichters, umfassend Mittel zur Durchführung des Verfahrens (6) nach einem der vorhergehenden Ansprüche.

**Claims**

**1.** Method (6) for controlling a three-phase Vienna rectifier (20), comprising a plurality of controlled power switches (Sa, Sb, Sc) that are each associated with one electrical phase; the method (6) being **characterized in that** it comprises:

- a step (60) of transforming three supplied setpoint phase-phase voltages (U*ab, U*bc, U*ac) into three setpoint phase-neutral voltages (v*a, v*b, v*c);
- a step (61) of calculating a homopolar component ($f(3wt)$) to be injected according to the values and the signs of the setpoint phase-neutral voltages (v*a, v*b, v*c) and to the average values of the phase currents (ia, ib, ic) of the three-phase Vienna rectifier (20);
- a step of calculating a modulant value (mod*a, mod*b, mod*c) for each phase of the three-phase Vienna rectifier (20) according to the calculated homopolar component ($f(3wt)$) to be injected and to the three setpoint phase-neutral voltages (v*a, v*b, v*c); and
- a step (62) of generating six signals for switching the controlled power switches (Sa, Sb, Sc) according to the sign of the phase currents (ia, ib, ic) of the three-phase Vienna rectifier (20) and to the calculated "modulant" values (mod*a, mod*b, mod*c), calculating the homopolar component ($f(3wt)$) comprising applying the following equation:

$$f(3wt) = v_z^* = \frac{\sigma_a.\left(v_a^* \times \langle i_a \rangle\right) + \sigma_b.\left(v_b^* \times \langle i_b \rangle\right) + \sigma_c.\left(v_c^* \times \langle i_c \rangle\right)}{-\left(\sigma_a.\langle i_a \rangle + \sigma_b.\langle i_b \rangle + \sigma_c.\langle i_c \rangle\right)}$$

in which $\quad \sigma_{x=a,b,c} = \text{sign}\left(v_{x=a,b,c}^*\right) \quad$ according to the values from the following table:

| Condition | $\sigma_a$ | $\sigma_b$ | $\sigma_c$ |
|---|---|---|---|
| $v_a^* \geq 0, v_b^* < 0$ and $v_c^* < 0$ | + | - | - |
| $v_a^* \geq 0, v_b^* \geq 0$ and $v_c^* < 0$ | + | + | - |
| $v_a^* < 0, v_b^* \geq 0$ and $v_c^* < 0$ | - | + | - |
| $v_a^* < 0, v_b^* \geq 0$ and $v_c^* \geq 0$ | - | + | + |
| $v_a^* < 0, v_b^* < 0$ and $v_c^* \geq 0$ | - | - | + |
| $v_a^* \geq 0, v_b^* < 0$ and $v_c^* \geq 0$ | + | - | + |

2. Method (6) according to Claim 1, **characterized in that** each modulant value (mod*a, mod*b, mod*c) is calculated by adding the homopolar component (*f*(3*wt*)) to the associated setpoint phase-neutral voltage (v*a, v*b, v*c) .

3. Method (6) according to Claim 1 or 2, **characterized in that** the operation (62) of generating the six signals for switching the controlled power switches (Sa, Sb, Sc) comprises comparing the modulant values (mod*a, mod*b, mod*c) with two high-frequency carriers that are synchronized and in phase with one another.

4. Method (6) according to Claim 3, **characterized in that**, for each phase of the Vienna rectifier (20), if the phase current is positive, the modulant associated with the phase is compared with a symmetrical triangle-wave signal varying between 0 and +1.

5. Method (6) according to Claim 3 or 4, **characterized in that**, for each phase of the Vienna rectifier (20), if the phase current is negative, the modulant associated with the phase is compared with a symmetrical triangle-wave signal varying between -1 and 0.

6. Device for controlling a three-phase Vienna rectifier comprising means for implementing the method (6) according to any one of the preceding claims.

**Fig.1**

10

Chargeur

30

40

13

20

12

Réseau
électrique

Impédance
de ligne

Input Filter

PFC

DC/DC

Batterie
400V

# Fig.2

## Fig.3

**Fig.4**

signe($i_{abc}$)

$3$

Oui    signe($i_{abc}$) $\geq 0$    Non

mod*$_{abc}$    $3$    $\leq 0$    $3$

$1$
$0$
$T_{PWM}$

$1$

$3$

S$_{abc_h}$

signe($i_{abc}$)

$3$

**Fig.5**

Oui    signe($i_{abc}$) $\geq 0$    Non

$1$    $3$

$3$    $0 \leq$    $3$    mod*$_{abc}$

$0$
$-1$
$T_{PWM}$

$3$

S$_{abc_l}$

**EP 3 639 355 B1**

**RÉFÉRENCES CITÉES DANS LA DESCRIPTION**

**Documents brevets cités dans la description**

- CN 104811061
- EP 94120245 A
- WO 0147094 A